# EUROPEAN PATENT APPLICATION

(11) **EP 3 438 218 A1**
(43) Date of publication of application: **06.02.2019**
(21) Application number: 17775386.0
(22) Date of filing: 30.03.2017
(51) Int. Cl.: C09D 127/12, B32B 15/08, B32B 27/30, C08F 214/18, C09D 5/44, C09D 133/00

(54) **FLUORORESIN-CONTAINING ELECTRODEPOSITION COATING MATERIAL**

(30) Priority: 31.03.2016 JP 2016071051
(71) Applicant: LIXIL Corporation, Koto-ku Tokyo 136-8535 (JP); Daikin Industries, Ltd., Osaka-shi, Osaka 530-8323 (JP)
(72) Inventor: OOMURO, Suguru, Tokyo 136-8535 (JP); EBIHARA, Mamoru, Tokyo 136-8535 (JP); IMOTO, Katsuhiko, Settsu-shi Osaka 566-8585 (JP); KAWABE, Takuma, Settsu-shi Osaka 566-8585 (JP)
(74) Representative: Rössler, Matthias
(86) International application number: PCT/JP2017/013209
(87) International publication number: WO 2017/170852

(57) **Abstract**

Provided is a fluororesin-containing electrodeposition coating composition which, although being an electrodeposition coating material, has sufficient storage stability. The electrodeposition coating composition comprises: a fluorocopolymer comprising perhaloolefin units, units of a monomer represented by the following general formula (1), units of a carboxylated vinyl monomer, and units of a hydroxylated vinyl monomer; and an acrylic polymer. In the following general formula (1), R is preferably a C₉ or higher hydrocarbon group.

CH₂=CH-O-CO-R (1)

(In the formula, R is a C₆ or higher hydrocarbon group.)

## Description

### TECHNICAL FIELD

The present invention relates to an electrodeposition coating material containing a fluororesin.

### BACKGROUND ART

Conventionally, a technology of using a fluororesin composition excellent in weather resistance as a crosslinking aqueous coating material is known. The crosslinking aqueous coating material is generally inferior to a crosslinking solvent coating material in coating film performance, and thus the crosslinking aqueous coating material is variously improved. However, since compatibility between the fluororesin composition and a curing agent is low, storage stability as the coating material is not sufficient.

In this regard, in order to solve the above-described problem, an invention relating to a fluororesin aqueous dispersion, which contains a fluorocopolymer containing a perhaloolefin unit, a C₂₋₄ non-fluorine vinyl monomer unit, an undecylenic acid unit, and a hydroxyl group-containing vinyl monomer unit, or a neutralized material thereof, is proposed (for example, see Patent Document 1 described below).

Patent Document 1: Japanese Unexamined Patent Application, Publication No. 2011-144254

### DISCLOSURE OF THE INVENTION

### Problems to be Solved by the Invention

In a case where the fluororesin aqueous dispersion described in Patent Document 1 is tried to be used as an electrodeposition coating material, storage stability is not sufficient yet, and the fluororesin aqueous dispersion cannot be used practically as an electrodeposition coating material.

The present invention is made in view of the above problems, and an object thereof is to provide a fluororesin-containing electrodeposition coating composition which, although being used as an electrodeposition coating material, has sufficient storage stability.

### Means for Solving the Problems

In order to achieve the above-described object, the present invention provides an electrodeposition coating composition containing: a fluorocopolymer having a perhaloolefin unit, a monomer unit represented by the following general formula (1), a carboxy group-containing vinyl monomer unit, and a hydroxyl group-containing vinyl monomer unit; and an acrylic polymer.

CH₂=CH-O-CO-R (1)

(In the formula, R is a C₆ or higher hydrocarbon group.)

It is preferable that R in the general formula (1) is a C₉ or higher hydrocarbon group.

It is preferable that a solid content of the fluorocopolymer in a total solid content of the fluorocopolymer and the acrylic polymer is 20% by mass or more and less than 80% by mass.

Further, the present invention relates to an electrodeposition coating film being formed by the above-described electrodeposition coating composition.

Furthermore, the present invention relates to a laminated body including a base material and the above-described electrodeposition coating film.

It is preferable that the base material is aluminum.

### Effects of the Invention

According to the present invention, it is possible to provide a fluororesin-containing electrodeposition coating composition which, although being used as an electrodeposition coating material, has sufficient storage stability.

### PREFERRED MODE FOR CARRYING OUT THE INVENTION

Hereinafter, preferred embodiments of the present invention will be described. Incidentally, the present invention is not limited to the following embodiments.

An electrodeposition coating composition according to this embodiment is used as a coating composition for anionic electrodeposition. A base material that is a coated object of an anionic electrodeposition coating material is not particularly limited, and examples thereof include aluminum and an aluminum alloy. These materials may be subjected to anodizing treatment. Since the aluminum or the like subjected to anionic electrodeposition coating has excellent weather resistance, the aluminum or the like is preferably used, for example, as a building material for construction such as a building or ordinary houses. Specifically, the aluminum or the like is preferably used as a base material for aluminum sashes, doors and windows, or balconies, a roof material, and a material for doors or the like.

The electrodeposition coating composition according to this embodiment contains a fluorocopolymer, an acrylic polymer, and a curing agent.

### <Fluorocopolymer>

The fluorocopolymer has a perhaloolefin unit, a monomer unit represented by the following general formula (1), a carboxy group-containing vinyl monomer unit, and a hydroxyl group-containing vinyl monomer unit.

CH₂=CH-O-CO-R (1)

(In the formula, R is a C₆ or higher hydrocarbon group.) Hereinafter, each monomer constituting each unit will be described.

Examples of perhaloolefin constituting the perhaloolefin unit include fluoroolefins such as tetrafluoroethylene (TFE), chlorotrifluoroethylene (CTFE), and hexafluoropropylene (HFP). These fluoroolefins may be used alone or in combination of two or more kinds thereof. Of them, TFE or HFP, particularly TFE is preferably used. With use of these fluoroolefins, a fluorine content in the fluorocopolymer can be increased, and a coating film excellent in chemical resistance, water resistance, solvent resistance, contamination resistance, weather resistance, and the like is obtained.

A content of the perhaloolefin unit is set to preferably 30 to 70% by mol. With the above range, compatibility between the fluorocopolymer and the curing agent becomes favorable, and preferable characteristics of the coating film such as weather resistance and solvent resistance are obtained. The range is set to more preferably 35 to 60% by mol and further preferably 40 to 55% by mol.

Further, the fluorocopolymer according to this embodiment has a monomer unit represented by the following general formula (1).

CH₂=CH-O-CO-R (1)

(In the formula, R is a C₆ or higher hydrocarbon group.) Incidentally, the hydrocarbon group may be any one of linear, branched, and cyclic groups. Specific examples of the monomer satisfying the general formula (1) include vinyl caproate, vinyl versatate, vinyl laurate, vinyl stearate, and vinyl cyclohexylcarboxylate. As the monomer, from the viewpoint of being excellent in weather resistance and compatibility, vinyl versatate, vinyl laurate, vinyl stearate, vinyl cyclohexylcarboxylate, and the like are preferably used. Of these, from the viewpoint of chemical resistance, a nonaromatic carboxylic acid vinyl ester, particularly, a carboxylic acid vinyl ester having 6 or more carbon atoms in carboxylic acid is more preferably used. Further, a carboxylic acid vinyl ester having 9 or more carbon atoms in carboxylic acid is further preferably used. An upper limit of the number of carbon atoms in carboxylic acid of the carboxylic acid vinyl ester is set to preferably 20 or less and more preferably 15 or less. As a specific example, vinyl versatate is most preferable. These monomers may be used alone or in combination of two or more kinds thereof.

A content of the monomer unit represented by the above-described general formula (1) is set to preferably 0.1 to 15% by mol in the fluorocopolymer. With the above range, compatibility between the fluorocopolymer and the acrylic polymer described later becomes favorable. The range is set to more preferably 0.2 to 8% by mol.

The carboxy group-containing vinyl monomer is preferably undecylenic acid. The undecylenic acid is a C₁₁ linear unsaturated carboxylic acid and introduces a carboxy group into the fluorocopolymer. The carboxy group introduced by the undecylenic acid provides water dispersibility to the fluorocopolymer and can be used also in crosslinking reaction. The undecylenic acid has a longer hydrocarbon chain than crotonic acid or the like and can significantly improve compatibility with the curing agent. Further, since an ester bond generated in the case of introducing a carboxy group by using trimellitic acid is not generated, degradation in storage stability caused by ester cleavage does not also occur. Further, the undecylenic acid is preferable in terms of a homopolymer being difficult to generate, polymerization reactivity being favorable, the undecylenic acid being sparingly hydrolysable, or the like.

A content of an undecylenic acid unit is preferably such an amount that an acid value of the fluorocopolymer thus obtained is set in a range of 10 to 100 mgKOH/g. In the case of this range, a balance between compatibility with the curing agent and water dispersibility becomes favorable. In particular, such an amount that the acid value is set in a range of 30 to 100 mgKOH/g, particularly, 40 to 80 mgKOH/g is preferable.

Examples of the hydroxyl group-containing vinyl monomer include a hydroxyl group-containing alkyl vinyl ether and hydroxyl group-containing alkyl aryl ether represented by the following general formula (2).

CH₂=CHR¹ (2)

(In the formula, R¹ is -OR² or -CH₂OR² (provided that, R² is an alkyl group having a hydroxyl group).)

Examples of R² in the general formula (2) include those in which one to three hydroxyl groups, preferably, one hydroxyl group is bonded to a C₁₋₈ linear or branched alkyl group. Examples thereof include 2-hydroxyethyl vinyl ether, 3-hydroxypropyl vinyl ether, 2-hydroxypropyl vinyl ether, 2-hydroxy-2-methyl propyl vinyl ether, 4-hydroxybutyl vinyl ether, 4-hydroxy-2-methyl butyl vinyl ether, 5-hydroxypentyl vinyl ether, 6-hydroxyhexyl vinyl ether, 2-hydroxyethyl allyl ether, 4-hydroxybutyl allyl ether, and glycerol monoallyl ether. Of these, 4-hydroxybutyl vinyl ether and 2-hydroxyethyl vinyl ether are preferable in terms of being in excellent polymerization reactivity and curability.

Other examples of the hydroxyl group-containing vinyl monomer include 2-hydroxyethyl acrylate and 2-hydroxyethyl methacrylate.

A content of the hydroxyl group-containing vinyl monomer unit is preferably such an amount that a hydroxyl value of the fluorocopolymer thus obtained is set in a range of 10 to 200 mgKOH/g. In the case of this range, preferable characteristics such as solvent resistance and contamination resistance are obtained. Regarding the hydroxyl value, when the hydroxyl value is 10 mgKOH/g or more, further 30 mgKOH/g or more, and particularly 50 mgKOH/g or more, crosslinking density is high, which is preferable in terms of a coating film excellent in contamination resistance, weather resistance, and hardness being obtained. Further, an upper limit of the hydroxyl value is 200 mgKOH/g and preferably 150 mgKOH/g, which is advantageous in terms of flexibility being provided to a coating film.

Further, in addition to the above description, other monomers may be further copolymerized in a range that does not impair the object of the present invention. Examples of the other monomers which are copolymerizable include an aromatic vinyl monomer, a non-hydroxyl group-containing vinyl ester, and a non-hydroxyl group-containing vinyl ether. The aromatic vinyl monomer has an effect of increasing a glass-transition temperature of the copolymer and an effect of improving hardness or contamination resistance of a coating film. Further, the non-hydroxyl group-containing vinyl ester and the non-hydroxyl group-containing vinyl ether have effects of adjusting the glass-transition temperature of the coating film and improving gloss.

A number average molecular weight of the fluorocopolymer according to this embodiment is preferably 100,000 or less and more preferably 50,000 or less from the viewpoint of solution polymerization property. Further, from the viewpoint of obtaining a coating film excellent in weather resistance and durability, the number average molecular weight is preferably 4,000 or more and more preferably 5,000 or more.

As a method for producing the fluorocopolymer according to this embodiment, the fluorocopolymer is preferably produced by a solution polymerization method. With use of the solution polymerization method, a fluorocopolymer in which the number average molecular weight of the fluorocopolymer resin is in the above range can be simply obtained. In the solution polymerization method, polymerization reaction is conducted, for example, using a polymerization initiator in an organic solvent at a polymerization temperature of 10 to 90°C for 1 to 20 hours.

Examples of the organic solvent include esters such as methyl acetate, ethyl acetate, propyl acetate, and butyl acetate; ketones such as acetone, methyl ethyl ketone, and cyclohexanone; hydrocarbons such as hexane, cyclohexane, and octane; aromatic hydrocarbons such as benzene, toluene, xylene, and naphthalene; alcohols such as methanol, ethanol, tert-butanol, iso-propanol, and ethylene glycol monoalkyl ether; cyclic ethers such as tetrahydrofuran, tetrahydropyran, and dioxane; dimethyl sulfoxide; and mixtures of these. Of them, from the viewpoint of solubility of the fluororesin, acetone, ethyl acetate, and butyl acetate are preferably used.

Examples of the polymerization initiator which can be used include diacyl peroxides such as octanoyl peroxide, acetyl peroxide, and benzoyl peroxide; dialkoxy carbonyl peroxides such as isopropoxycarbonyl peroxide and tert-butoxycarbonyl peroxide; ketone peroxides such as methyl ethyl ketone peroxide and cyclohexanone peroxide; hydroperoxides such as hydrogen peroxide, tert-butyl hydroperoxide, and cumene hydroperoxide; dialkyl peroxides such as di-tert-butyl peroxide and dicumyl peroxide; alkyl peroxy esters such as tert-butyl peroxyacetate and tert-butyl peroxypivalate; persulfates such as ammonium persulfate and potassium persulfate (a reducing agent such as sodium bisulfite, sodium pyrosulfife, cobalt naphthenate, and dimethylaniline can be further used in combination as necessary); redox initiators formed from an oxidizer (such as ammonium peroxide or potassium peroxide), a reducing agent (such as sodium sulfite), and a transition metal salt (such as iron sulfate); and azo-based compounds such as 2,2'-azobisisobutyronitrile, 2,2'-azobis(2,4-dimethylvaleronitrile), 2,2'-azobis(2-methylvaleronitrile), 2,2'-azobis(2-cyclopropylpropionitrile), dimethyl 2,2'-azobisisobutyrate, 2,2'-azobis[2-(hydroxymethyl)propionitrile], and 4,4'-azobis(4-cyanopentanoic acid).

Alcohols, such as methanol, ethanol, and propanol, and the like may be also used as a molecular weight adjuster as necessary.

### <Acrylic Polymer>

The acrylic polymer is obtained by copolymerizing radically polymerizable unsaturated monomers and has a carboxy group and a hydroxyl group in one molecule. Examples of the radically polymerizable unsaturated monomers include a carboxy group-containing radically polymerizable unsaturated monomer and a hydroxyl group-containing radically polymerizable unsaturated monomer. Further, in addition to those examples, an alkyl ester of acrylic acid or methacrylic acid, a vinyl aromatic compound, and the like may be contained.

Examples of the carboxy group-containing radically polymerizable unsaturated monomer include acrylic acid, methacrylic acid, crotonic acid, itaconic acid, maleic acid, and fumaric acid.

Examples of the hydroxyl group-containing radically polymerizable unsaturated monomer include 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, and 4-hydroxybutyl (meth)acrylate.

Examples of the alkyl ester of acrylic acid or methacrylic acid include methyl (meth)acrylate, ethyl (meth)acrylate, n-butyl (meth)acrylate, isobutyl (meth)acrylate, tert-butyl (meth)acrylate, hexyl (meth)acrylate, 2-ethylhexyl (meth)acrylate, n-octyl (meth)acrylate, and cyclohexyl methacrylate.

Examples of the vinyl aromatic compound or the like include styrene, α-methylstyrene, vinyl toluene, p-chlorostyrene, and vinylpyridine.

Further, a radically polymerizable unsaturated monomer other than the above-described examples may be contained. For example, a reaction product of a lactone compound with an alkoxysilyl group-containing radically polymerizable unsaturated monomer and a hydroxyl group-containing radically polymerizable unsaturated monomer, and the like may be contained.

Production of the acrylic polymer can be conducted by a solution polymerization method, similarly to the production of the fluorocopolymer.

A weight average molecular weight of the obtained acrylic polymer is preferably 4,000 to 100,000 and more preferably 5,000 to 50,000. Further, similarly, an acid value is preferably 5 to 180 mgKOH/g and more preferably 10 to 80 mgKOH/g. Further, similarly, a hydroxyl value is preferably 3 to 150 mgKOH/g and more preferably 10 to 80 mgKOH/g.

In the electrodeposition coating composition according to this embodiment, a solid content of the fluorocopolymer in a total solid content of the fluorocopolymer and the acrylic polymer is 20% by mass or more and less than 80% by mass. In a case where the solid content of the fluorocopolymer is less than 20% by mass, sufficient weather resistance of a coating film thus obtained is not obtained, and in a case where the solid content thereof is 80% by mass or more, preferable storage stability of the electrodeposition coating composition is not obtained. The solid content of the fluorocopolymer is preferably 30% by mass or more and 70% by mass or less.

### <Curing Agent>

The curing agent used in the electrodeposition coating composition for anionic electrodeposition of this embodiment is not particularly limited, and a conventionally known compound can be used. Examples of the curing agent include a melamine resin and a block-type isocyanate compound.

Examples of the melamine resin include complete alkyl-type methyl/butyl mixed etherified melamine resins, methylol group-type methyl/butyl mixed etherified melamine resins, imino-type methyl/butyl mixed etherified melamine resins, complete alkyl-type methylated melamine resins, and imino group-type methylated melamine resins. Of them, it is preferable to use complete alkyl-type methyl/butyl mixed etherified melamine resins or complete alkyl-type methylated melamine resins from the viewpoint that storage stability of the electrodeposition coating composition becomes favorable.

A polyisocyanate compound in the block-type isocyanate compound is a compound having two or more free isocyanate groups in one molecule. Examples of such a compound include aliphatic diisocyanate compounds such as hexamethylene diisocyanate, trimethyl hexamethylene diisocyanate, and dimer acid diisocyanate; alicyclic diisocyanate compounds such as hydrogenated xylylene diisocyanate, cyclohexylene diisocyanate, methylene bis(cyclohexylisocyanate), and isophorone diisocyanate; aromatic diisocyanate compounds such as tolylene diisocyanate, phenylene diisocyanate, 4,4'-diphenylmethane diisocyanate, xylylene diisocyanate, tetramethylxylylene diisocyanate, and naphthalene diisocyanate; and trivalent or higher organic polyisocyanate compounds such as 2-isocyanatoethyl-2,6-diisocyanatocaproate, 3-isocyanatomethyl-1,6-hexamethylene diisocyanate, and 4-isocyanatomethyl-1,8-octamethylene diisocyanate. These polyisocyanate compounds may be cyclopolymers or biurets. Incidentally, these compounds may be used alone or in combination of two or more kinds thereof.

Examples of a blocking agent in the block-type isocyanate compound include oxime-based compounds such as methyl ethyl ketoxime, methyl amyl ketoxime, and cyclohexanone oxime; phenolic compounds such as phenol, para-t-butylphenol, and cresol; aliphatic alcohols such as n-butanol and 2-ethylhexanol; aromatic alkyl alcohols such as phenylcarbinol and methylphenylcarbinol; ether alcohol-based compounds such as ethylene glycol monobutyl ether and diethylene glycol monoethyl ether; lactam-based compounds such as ε-caprolactam and γ-butyrolactam.

In the electrodeposition coating composition according to this embodiment, in addition to the fluorocopolymer, the acrylic polymer, and the curing agent, other components may be contained as necessary. For example, in order to improve storage stability of the electrodeposition coating composition, a surfactant may be used. Examples of a preferable surfactant include an anionic surfactant and a nonionic surfactant. These may be used alone or in combination.

Examples of the anionic surfactant which can be used include a sodium salt of sulfate ester of a higher alcohol, sodium alkyl benzenesulfonate, a sodium salt of dialkyl succinate sulfonic acid, and a sodium salt of alkyl diphenyl ether sulfonic acid. Specifically, sodium alkyl benzenesulfonate, sodium lauryl sulfate, polyoxyethylene alkyl (or alkylphenyl) ether sulfonate, and the like are preferably used. Examples of the nonionic surfactant which can be used include polyoxyethylene alkyl ether and polyoxyethylene alkyl aryl ether. Specifically, polyoxyethylene nonylphenyl ether, polyoxyethylene octylphenyl ether, and the like are preferably used. As an amphoteric surfactant, lauryl betaine and the like are preferably exemplified. Examples of a cationic surfactant which can be used include alkylpyridinium chloride and alkylammonium chloride. Further, an emulsifier which is copolymerizable with a monomer, for example, sodium styrenesulfonate, sodium alkyl aryl sulfonate, and the like can also be used.

A method for preparing the electrodeposition coating composition according to this embodiment is performed by mixing the fluorocopolymer, the acrylic polymer, the curing agent, and the like and inputting the resultant mixture in water under stirring or adding water to the resultant mixture under stirring.

During the preparation method or before or after the preparation method, the carboxy groups of a fluorocopolymer and the acrylic polymer may be neutralized with alkali. According to this, water dispersibility of the electrodeposition coating composition is further improved. For example, it is preferable that the carboxy group is made to be an ammonium salt, an amine salt, an alkali metal salt, or the like by neutralization with alkali.

Examples of a neutralizer used in the neutralization include ammonia; organic amines such as diethylamine, ethyl ethanolamine, diethanolamine, monoethanolamine, monopropanolamine, isopropanolamine, ethylaminoethylamine, hydroxyethylamine, diethylenetriamine, and triethylamine; and hydroxides of alkali metals such as sodium hydroxide and potassium hydroxide. Of these, ammonia, triethylamine, and diethanolamine are preferable in terms of ease of availability, water dispersibility, and the like, and ammonia and triethylamine are particularly advantageous in terms of ease of handleability.

The neutralizer is preferably used in the form of an aqueous solution, but may be used in the form of gas or a solid matter.

The neutralization by the neutralizer can be performed in a range of a neutralization equivalent of 0.3 or more and 1.2 or less and preferably in a range of a neutralization equivalent of 0.5 or more and 0.9 or less with respect to the carboxy groups of the fluorocopolymer and the acrylic polymer.

A solid content concentration of the electrodeposition coating composition of this embodiment is set to typically 5% by mass or more in terms of coating efficiency and preferably 8% by mass or more. Further, in terms of storage stability, the solid content concentration is set to typically 50% by mass or less and preferably 40% by mass or less.

### <Method for Forming Electrodeposition Coating Film>

A method for forming an electrodeposition coating film using the electrodeposition coating composition of this embodiment is to form an electrodeposition coating film by electrodeposition coating the electrodeposition coating composition to aluminum, an aluminum alloy, or the like as a base material. An electrodeposition coating method is not particularly limited, and a conventionally known method can be used. Specifically, the method for forming an electrodeposition coating film of this embodiment includes a step of immersing a base material in a bath of the electrodeposition coating composition, a step of depositing an electrodeposition coating film on a surface of the base material by applying a voltage between the base material and a cathode as an anode, and a step of washing the deposited electrodeposition coating film with water as necessary and baking the electrodeposition coating film at a predetermined temperature to complete a coating film.

A bath temperature of the electrodeposition coating composition is preferably 10 to 40°C. Further, an applied voltage is preferably 50 to 300 V, and a power supply time is preferably 30 to 600 seconds. A baking temperature is preferably 130 to 220°C. Further, a dry film thickness of the formed electrodeposition coating film is preferably 2 to 25 µm. Incidentally, since the electrodeposition coating film formed by the electrodeposition coating composition of this embodiment has excellent weather resistance, a depletion amount of the film thickness is small. Therefore, it is considered that the dry film thickness can be set to be thinner than the typical dry film thickness, and a material cost or a manufacturing cost can be reduced.

A top coating material may be coated to the electrodeposition coating film formed as described above, as necessary. As the top coating material, a conventionally known top coating material which contains a resin and a curing agent as main components can be used. The top coating material may be applied after the baking of the electrodeposition coating film, but may be applied by a so-called 2-coat 1-bake coating in which a top-coat coating film is applied on a coating film before baking and both the coating films are baked and cured at the same time.

### <Laminated Body>

A laminated body of this embodiment includes a base material and an electrodeposition coating film, and specifically, the laminated body is obtained by forming the electrodeposition coating film on the base material by the method for forming an electrodeposition coating film. The type of the base material is not limited as long as it can be subjected to electrodeposition coating, and particularly, aluminum or an aluminum alloy is preferably used. Further, the laminated body including the base material and the electrodeposition coating film may be a laminated body in which an electrodeposition coating composition is coated directly to a base material, but a separate layer such as an anodized film may be provided between the base material and the coating film.

### EXAMPLES

Hereinafter, the present invention will be described in more detail on the basis of Examples. However, the present invention is not limited to these Examples.

### [Production of Fluorocopolymer Varnish 1]

In a reaction vessel, 81 parts by mass of acetone as a solvent was charged, a mixture which is obtained by adding thereto 12.7 parts by mass of tetrafluoroethylene, 2.6 parts by mass of vinyl acetate, 0.4 parts by mass of vinyl versatate, 1.4 parts by mass of hydroxybutyl vinyl ether, 1.9 parts by mass of undecylenic acid, and an appropriate amount of peroxide having a 10 hours half-life temperature of about 50°C as an initiator, was increased in temperature to 60°C, and then reaction was continued. After completion of the reaction, the mixture was cooled to obtain a fluorocopolymer varnish 1.

### [Production of Fluorocopolymer Varnish 2]

Production was conducted in the similar condition to the condition described above to obtain a fluorocopolymer varnish 2, except that 12.5 parts by mass of tetrafluoroethylene, 1.8 parts by mass of vinyl acetate, 0.4 parts by mass of vinyl versatate, 2.4 parts by mass of hydroxybutyl vinyl ether, and 1.9 parts by mass of undecylenic acid were added.

### [Production of Fluorocopolymer Varnish 3]

Production was conducted in the similar condition to the condition described above to obtain a fluorocopolymer varnish 3, except that 8.7 parts by mass of tetrafluoroethylene, 3.4 parts by mass of isobutylene, 1.6 parts by mass of vinyl benzoate, 2.2 parts by mass of vinyl pivalate, 6.6 parts by mass of hydroxybutyl vinyl ether, and 5.4 parts by mass of undecylenic acid were added. The composition, the hydroxyl value, the acid value, and the number average molecular weight of each of the obtained fluorocopolymer varnishes 1 to 3 were as presented in Table 1. Incidentally, calculation methods of the hydroxyl value, the acid value, and the number average molecular weight are based on the following methods.

### (Calculation Method of Hydroxyl Value)

The monomer composition in the polymer is calculated from analysis of amounts of the generated polymer, the polymer solution, the remaining monomer, and the charged amount of the monomer. Then, the hydroxyl value in the polymer is calculated from the composition of the entire monomer and the composition of the hydroxyl group-containing monomer.

### (Calculation Method of Acid Value)

The monomer composition in the polymer is calculated from analysis of amounts of the generated polymer, the polymer solution, the remaining monomer, and the charged amount of the monomer. Then, the acid value in the polymer is calculated from the composition of the entire monomer and the composition of the carboxy group-containing monomer.

### (Calculation Method of Number Average Molecular Weight)

Measurement apparatus: Shodex GPC-104 manufactured by Showa Denko K.K. Measurement condition: Tetrahydrofuran is used as an eluent, and polystyrene with a known molecular weight is used as a standard sample for molecular weight.

### [Production of Acrylic Polymer Varnish 1]

In a reaction vessel, 55 parts by mass of isopropyl alcohol was charged as a solvent and held at 80°C, and a mixture of 33 parts by mass of methyl methacrylate, 20 parts by mass of n-butyl acrylate, 10 parts by mass of ethyl acrylate, 15 parts by mass of styrene, 15 parts by mass of hydroxyethyl acrylate, 7 parts by mass of acrylic acid, and 1 part by mass of azobismethylvaleronitrile as an initiator was added dropwise thereto over 3 hours. After completion of dropwise addition, that temperature was held for 1 hour, and then 0.5 parts by mass of azobismethylvaleronitrile as an initiator and 13 parts by mass of butyl cellosolve as a solvent were added dropwise over 1 hour. Thereafter, reaction was continued while the temperature was held to 80°C for 1 hour. After completion of the reaction, benzyl alcohol was added to adjust a solid content to 50%, thereby obtaining an acrylic polymer varnish 1.

### [Production of Acrylic Polymer Varnish 2]

Production was conducted in the similar condition to the condition described above to obtain an acrylic polymer varnish 2, except that 35 parts by mass of methyl methacrylate and 18 parts by mass of n-butyl acrylate were added and 15 parts by mass of cyclohexyl methacrylate was used instead of styrene.

Each component proportion and each physical property value (molecular weight, acid value, hydroxyl value) of the fluorocopolymer varnishes and the acrylic polymer varnishes are presented in Table 1 and Table 2.

**[Table 1]**

| | | Varnish 1 | Varnish 2 | Varnish 3 |
|---|---|---|---|---|
| Fluoro copolymer varnish (% by mol) | Tetrafluoroethylene | 48 | 48 | 45 |
| | Vinyl acetate | 28.7 | 20.2 | |
| | Vinyl versatate | 2 | 2 | |
| | Vinyl benzoate | | | 3.3 |
| | Vinyl pivalate | | | 5.4 |
| | Hydroxybutyl vinyl ether | 11.5 | 19.9 | 17.9 |
| | Undecylenic acid | 9.8 | 9.9 | 9.1 |
| | Isobutylene | | | 19.1 |
| Physical property value | Number average molecular weight | 10200 | 8300 | 7800 |
| | Acid value (mgKOH/g) | 50 | 50 | 50 |
| | Hydroxyl value (mgKOH/g) | 60 | 100 | 100 |

**[Table 2]**

| | | Varnish 1 | Varnish 2 |
|---|---|---|---|
| Acrylic polymer varnish (Parts by mass) | Methyl methacrylate | 33 | 35 |
| | n-Butyl acrylate | 20 | 18 |
| | Ethyl acrylate | 10 | 10 |
| | Styrene | 15 | |
| | Cyclohexyl methacrylate | | 15 |
| | Hydroxyethyl acrylate | 15 | 15 |
| | Acrylic acid | 7 | 7 |
| Physical property value | Number average molecular weight | 7000 | 5400 |
| | Acid value (mgKOH/g) | 53 | 53 |
| | Hydroxyl value (mgKOH/g) | 50 | 50 |

### [Example 1]

The fluorocopolymer varnish 2 and the acrylic polymer varnish 1 were mixed such that a mass ratio of solid content would be 70 : 30. 120 parts by mass of the mixed varnish thus obtained (60 parts by mass in terms of solid content), 4.5 parts by mass of triethylamine (0.8 equivalents with respect to the acid value of the mixed varnish), and 40 parts by mass of 100% fully etherified melamine resin (NIKALAC MX-45, manufactured by SANWA Chemical Co., Ltd.) were mixed, and 835.5 parts by mass of deionized water was input thereto under stirring, thereby preparing an electrodeposition coating composition of Example 1.

### [Examples 2 to 6, Comparative Examples 1 to 6]

Electrodeposition coating compositions of Examples 2 to 6 and Comparative Examples 1 to 6 were prepared using the similar materials and the similar method to those of Example 1, except that the types of the fluorocopolymer varnish and the acrylic polymer varnish each presented in Table 3 and Table 4 were mixed for use in ratios presented in Table 3 and Table 4. The following coating material property evaluation was conducted using the obtained electrodeposition coating composition of each of Examples and Comparative Examples.

### [Coating Material Stability Test (Still Standing for 24 Hours)]

After the preparation of the coating composition, the appearance of the coating composition after being left to stand still for 24 hours was evaluated by visual inspection according to the following criteria. Evaluation B was evaluated as pass, and evaluations C and D were evaluated as fail. Results are presented in Table 3 and Table 4.

### (Evaluation Criteria)

B: Abnormality is not recognized.
C: Settling of a part of the resin is observed.
D: The resin is completely settled out.

### [Coating Material Stability Test (Stirring for 1 Month)]

After the preparation of the coating composition, the coating composition was continued to be stirred with a magnetic stirrer under 20°C and 60% RH (500 rpm). The appearance of the coating composition after 1 month was evaluated by visual inspection according to the following criteria. Evaluation B was evaluated as pass, and evaluation C was evaluated as fail. Results are presented in Table 3 and

Table 4.

### (Evaluation Criteria)

B: Abnormality is not recognized.
C: The resin is completely settled out.

### [Production of Test Plate]

An electrodeposition coating film was formed on a base material under the following conditions using the electrodeposition coating composition of each of Examples and Comparative Examples and then a test plate was produced. A 6063-T5 aluminum alloy substrate (60 mm × 150 mm, plate thickness: 2 mm) subjected to anodic oxidation coating treatment having a coating film thickness of about 10 µm was used as a base material, and electrodeposition coating was conducted such that the dry coating film thickness would be 10 µm. After washing with water, the substrate was baked at 180°C for 30 minutes to obtain a test plate. The following coating film property evaluation test was conducted using each obtained test plate.

### [Weathering Test (Gloss Retention)]

An accelerated weathering test was conducted by METAL WEATHER Tester (manufactured by DAIPLA WINTES CO., LTD.) for 750 hours, and gloss after the test was measured using a glossmeter (GMX-102 manufactured by Murakami Color Research Laboratory, measurement angle: 60 degrees). Using a measurement value, an initial gloss of the sample which had been measured in advance before the accelerated weathering test was regarded as 100% and then a gloss retention rate (%) was calculated. Numerical values thus calculated were evaluated according to the following evaluation criteria. Evaluations A and B were evaluated as pass, and evaluations C and D were evaluated as fail. Further, respective test plates were prepared using the electrodeposition coating materials at the time of production of the coating material and after 1 week from the production of the coating material, and an evaluation test was conducted. Results are presented in Table 3 and Table 4.

### (Evaluation Criteria)

A: Gloss retention rate of 90% or more
B: Gloss retention rate of 80% or more and less than 90%
C: Gloss retention rate of 70% or more and less than 80%
D: Gloss retention rate of less than 70%

### [Weathering Test (Thickness Retention)]

An accelerated weathering test was conducted by METAL WEATHER Tester (manufactured by DAIPLA WINTES CO., LTD.) for 750 hours, and the film thickness after the test was measured using a film thickness meter (FMP-30 manufactured by FISCHER INSTRUMENTS K.K.). Using a measurement value, a change amount (depletion amount) was calculated from an initial film thickness of the sample which had been measured in advance before the accelerated weathering test. Numerical values thus calculated were evaluated according to the following evaluation criteria. Evaluation B was evaluated as pass, and evaluations C and D were evaluated as fail. Further, respective test plates were prepared using the electrodeposition coating materials at the time of production of the coating material and after 1 week from the production of the coating material, and an evaluation test was conducted. Results are presented in Table 3 and Table 4.

### (Evaluation Criteria)

B: Film thickness change amount of less than 3 µm
C: Film thickness change amount of 3 µm or more and less than 5 µm
D: Film thickness change amount of 5 µm or more

**[Table 3]**

| | | | Example 1 | Example 2 | Example 3 | Example 4 | Example 5 | Example 6 |
|---|---|---|---|---|---|---|---|---|
| Fluorocopolymer varnish | | Type | Varnish 2 | Varnish 2 | Varnish 2 | Varnish 2 | Varnish 2 | Varnish 1 |
| | | Content(Mass%) | 70 | 60 | 50 | 30 | 20 | 50 |
| Acrylic polymer varnish | | Type | Varnish 1 | Varnish 1 | Varnish 1 | Varnish 1 | Varnish 1 | Varnish 2 |
| | | Content(Mass%) | 30 | 40 | 50 | 70 | 80 | 50 |
| Coating material property evaluation | Coating material stability | Still standing for 24 hours | B | B | B | B | B | B |
| | | Stirring for 1 month | - | - | B | - | - | B |
| Coating film property evaluation | Weather resistance (At the time of production of coating material) | Thickness retention | B | B | B | B | B | B |
| | | Gloss retention | A | A | A | A | B | A |
| | Weather resistance (After 1 week from production) | Thickness retention | - | - | B | - | - | B |
| | | Gloss retention | - | - | B | - | - | A |

**[Table 4]**

| | | | Comparative Example 1 | Comparative Example 2 | Comparative Example 3 | Comparative Example 4 | Comparative Example 5 | Comparative Example 6 |
|---|---|---|---|---|---|---|---|---|
| Fluorocopolymer varnish | | Type | Varnish 2 | Varnish 3 | - | - | Varnish 3 | Varnish 3 |
| | | Content(Mass%) | 100 | 100 | 0 | 0 | 50 | 50 |
| Acrylic polymer varnish | | Type | - | - | Varnish 1 | Varnish 2 | Varnish 1 | Varnish 2 |
| | | Content(Mass%) | 0 | 0 | 100 | 100 | 50 | 50 |
| Coating material property evaluation | Coating material stability | Still standing for 24 hours | D | D | B | B | D | D |
| | | Stirring for 1 month | C | C | B | B | C | C |
| Coating film property evaluation | Weather resistance (At the time of production of coating material) | Thickness retention | B | B | C | D | B | B |
| | | Gloss retention | A | B | C | D | B | A |
| | Weather resistance (After 1 week from production) | Thickness retention | Not producible | Not producible | C | D | C | C |
| | | Gloss retention | Not producible | Not producible | C | D | C | C |

From comparison between Examples 3 and 6 and Comparative Examples 5 and 6, it was found that the electrodeposition coating compositions of Examples 3 and 6 are more excellent in evaluation results of the coating material stability and the weather resistance. From this result, it was confirmed that according to the electrodeposition coating composition of the present invention using the fluorocopolymer having a perhaloolefin unit and a C₅ or higher non-fluorine-containing carboxylic acid vinyl ester monomer unit, an electrodeposition coating film with excellent coating composition storage stability and high weather resistance can be formed.

From comparison between Examples 1 to 6 and Comparative Examples 1 to 4, it was found that the electrodeposition coating compositions of Examples 1 to 6 are more excellent in evaluation results of the coating material stability and the weather resistance. From this result, it was confirmed that by using the electrodeposition coating composition of the present invention containing both the fluorocopolymer varnish and the acrylic polymer, an electrodeposition coating film with excellent coating composition storage stability and high weather resistance can be formed.

## Claims

1. An electrodeposition coating composition comprising:
a fluorocopolymer comprising a perhaloolefin unit, a monomer unit represented by the following general formula (1), a carboxy group-containing vinyl monomer unit, and a hydroxyl group-containing vinyl monomer unit; and
an acrylic polymer.
CH₂=CH-O-CO-R (1)
(In the formula, R is a C₆ or higher hydrocarbon group.)

2. The electrodeposition coating composition according to claim 1, wherein R in the general formula (1) is a C₉ or higher hydrocarbon group.

3. The electrodeposition coating composition according to claim 1 or 2, wherein a solid content of the fluorocopolymer in a total solid content of the fluorocopolymer and the acrylic polymer is 20% by mass or more and less than 80% by mass.

4. An electrodeposition coating film being formed by the electrodeposition coating composition according to any one of claims 1 to 3.

5. A laminated body comprising a base material and the electrodeposition coating film according to claim 4.

6. The laminated body according to claim 5, wherein the base material is aluminum.
